# EUROPEAN PATENT APPLICATION

(11) **EP 4 760 382 A1**
(43) Date of publication of application: **17.06.2026**
(21) Application number: 24851611.4
(22) Date of filing: 24.07.2024
(51) Int. Cl.: G02F 1/13357, F21S 2/00, F21V 19/00, G02F 1/1333, G09F 9/00

(54) **DISPLAY DEVICE, LIGHT-EMITTING DEVICE, AND LIGHT IRRADIATION METHOD**

(30) Priority: 08.08.2023 JP 2023129072
(71) Applicant: Sony Group Corporation, Tokyo 108-0075 (JP)
(72) Inventor: YOSHIDA, Ayumi, Tokyo 108-0075 (JP); OHNETA, Kohei, Tokyo 108-0075 (JP)
(74) Representative: 2SPL Patentanwälte PartG mbB
(86) International application number: PCT/JP2024/026483
(87) International publication number: WO 2025/033184

(57) **Abstract**

A display apparatus according to the present technology includes: a housing in which an internal space is formed by a front frame and a back chassis disposed behind the front frame; a liquid crystal panel held by the front frame; a light emitter substrate having a front surface on which a plurality of light emitters that emit light from behind the liquid crystal panel is mounted; a first reflective sheet attached to a portion of the front surface of the light emitter substrate, the light emitters being not mounted on the portion of the front surface of the light emitter substrate; and a second reflective sheet attached to a portion of a front surface of the back chassis, the light emitter substrate being not attached to the portion of the front surface of the back chassis.

## Description

### TECHNICAL FIELD

The present technology relates to a technology of a display apparatus, a light emitting device, and a light emission method that use light emitted from light emitters.

### BACKGROUND ART

In some display apparatus that is typically a television set, a reflective sheet is attached to the back chassis or the like to increase efficiency of utilization of light emitted from light emitters.

For example, Patent Document 1 discloses a configuration in which a backlight unit included in a display apparatus has a reflective sheet on which a plurality of light emitters (light sources) is arrayed.

### CITATION LIST

### PATENT DOCUMENT

Patent Document 1: WO 2020/075437 A

### SUMMARY OF THE INVENTION

### PROBLEMS TO BE SOLVED BY THE INVENTION

Note that such a reflective sheet is a large sheet having substantially the same size as the display unit in the case of a display apparatus, for example.

However, the reflective sheet formed as a large-sized sheet requires a complicated work to be attached to the back chassis or the like, and it has been difficult to automate the attachment work. In particular, with a reflective sheet having exposure holes formed for exposing light emitters therethrough, it has been difficult to perform the work of exposing a plurality of light emitters through the exposure holes.

The present technology has been made in view of such a problem, and aims to facilitate the work of attaching reflective sheets.

### SOLUTIONS TO PROBLEMS

A display apparatus according to the present technology includes: a housing in which an internal space is formed by a front frame and a back chassis disposed behind the front frame; a liquid crystal panel attached to the back surface side of the front frame; a light emitter substrate having a front surface on which a plurality of light emitters that emit light from behind the liquid crystal panel is mounted; a first reflective sheet attached to a portion of the front surface of the light emitter substrate, the light emitters being not mounted on the portion of the front surface of the light emitter substrate; and a second reflective sheet attached to a portion of the front surface of the back chassis, the light emitter substrate being not attached to the portion of the front surface of the back chassis.

With this configuration, it is not necessary to use a large reflective sheet that covers the entire back chassis.

A light emitting device according to the present technology includes: a housing in which an internal space is formed by a front frame and a back chassis disposed behind the front frame; a light emitter substrate that is disposed in the internal space and has a front surface on which a plurality of light emitters that emit light frontward is mounted; a first reflective sheet attached to a portion of the front surface of the light emitter substrate, the light emitters being not mounted on the portion of the front surface of the light emitter substrate; and a second reflective sheet attached to a portion of the front surface of the back chassis, the light emitter substrate being not attached to the portion of the front surface of the back chassis.

A light emission method according to the present technology includes emitting light frontward, the light including: light from a plurality of light emitters mounted on a light emitter substrate disposed in an internal space of a housing that includes a front frame and a back chassis disposed behind the front frame; light that has been emitted from the light emitters and been reflected by a first reflective sheet attached to a portion on which light emitters are not mounted on the front surface of the light emitter substrate; and light that has been emitted from the light emitters and been reflected by a second reflective sheet attached to a portion to which the light emitter substrate is not attached on the front surface of the back chassis.

In such a light emitting device and a light emission method, it is not necessary to use a large reflective sheet either.

### BRIEF DESCRIPTION OF DRAWINGS

Fig. 1 is a perspective view of a display apparatus.
Fig. 2 is a schematic exploded perspective view illustrating the configuration of a display unit.
Fig. 3 is a longitudinal sectional view of the display unit.
Fig. 4 is a transverse sectional view of the display unit.
Fig. 5 is a schematic perspective view of a substrate unit.
Fig. 6 is an explanatory diagram illustrating a state in which a back chassis is covered with each reflective sheet in a front view.
Fig. 7 is an explanatory diagram illustrating a state in which light emitters and diffusing lenses are exposed through exposure holes when a first reflective sheet is attached to a light emitter substrate.
Fig. 8 is a perspective view illustrating a back surface portion of a first reflective sheet.
Fig. 9 is a perspective view illustrating a state in which a first reflective sheet is attached to a light emitter substrate by belt-like second adhesive members.
Fig. 10 is a schematic cross-sectional view of a reflective sheet.
Fig. 11 is a table showing an example of the reflectance of each reflective sheet.
Fig. 12 is a diagram illustrating a modification of belt-like regions.

### MODE FOR CARRYING OUT THE INVENTION

In the description below, an embodiment will be explained in the following order.
<1. Configuration of Display Apparatus>
<2. Reflectances of Reflective Sheets>
<3. Conclusion>
<4. Modification>
<5. Present Technology>

### <1. Configuration of Display Apparatus>

The configuration of a display apparatus 1 according to the present technology is described with reference to each drawing. Note that the display apparatus 1 is an apparatus on which a video image or an image is displayed, such as a television apparatus or a monitor apparatus, for example.

Note that, in the description below, a front-back direction is mentioned, with the front being the direction in which light is mainly emitted. That is, the thickness direction of the display apparatus 1 is the front-back direction. Also, a horizontal direction and a vertical direction in a state where the display apparatus 1 is installed are mentioned. That is, as for the horizontally long display apparatus 1, the longitudinal direction is the horizontal direction, and the short-side direction is the vertical direction.

Note that these directions are merely for ease of explanation, and are not limited to these directions in the practice of the invention.

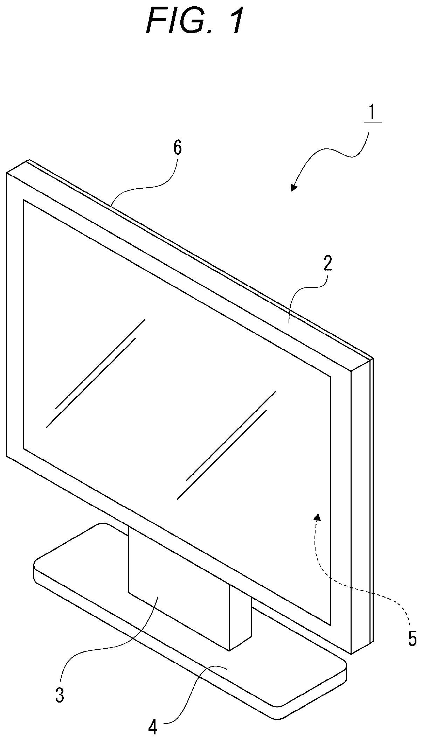

As illustrated in Fig. 1, the display apparatus 1 includes: a display unit 2 formed in a substantially rectangular shape; a support unit 3 that is attached to a back surface portion of the display unit 2 and extends in the vertical direction; and a base unit 4 to which the lower end of the support unit 3 is attached and which has a shape that is flat in the horizontal direction to stabilize postures of the display unit 2 and the support unit 3.

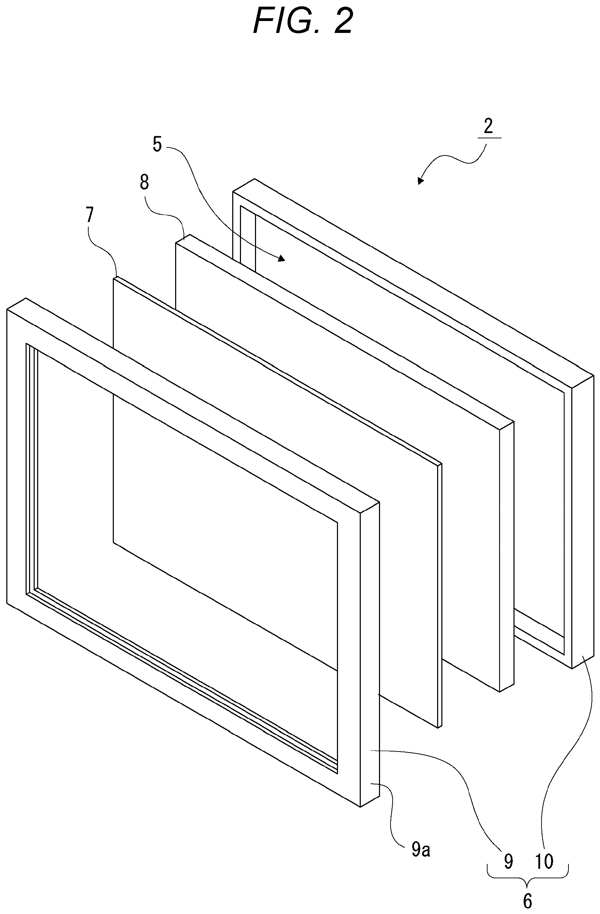

As illustrated in Figs. 1 and 2, the display unit 2 includes: a housing 6 formed in a box-like shape having an internal space 5; a liquid crystal panel 7 disposed in the internal space 5 of the housing 6; and a backlight unit 8 disposed behind the liquid crystal panel 7.

The housing 6 includes a front frame 9 that is formed in a frame-like shape and has its outer end as a side surface portion 9a protruding toward the back, and a back chassis 10 attached behind the front frame 9.

Note that the back chassis 10 may constitute the backlight unit 8.

The housing 6 has a box-like shape that is open toward the front.

Although not illustrated in the drawings, in the liquid crystal panel 7, liquid crystal is enclosed between two glass substrates, for example, and a polarizing plate is provided both in front of the front glass substrate and behind the back glass substrate.

On one of the two glass substrates, switching elements such as thin film transistors (TFTs) arranged in a matrix fashion, pixel electrodes, an oriented film, and the like are provided.

On the other glass substrate, on the other hand, color filters, counter electrodes, an oriented film, and the like are provided.

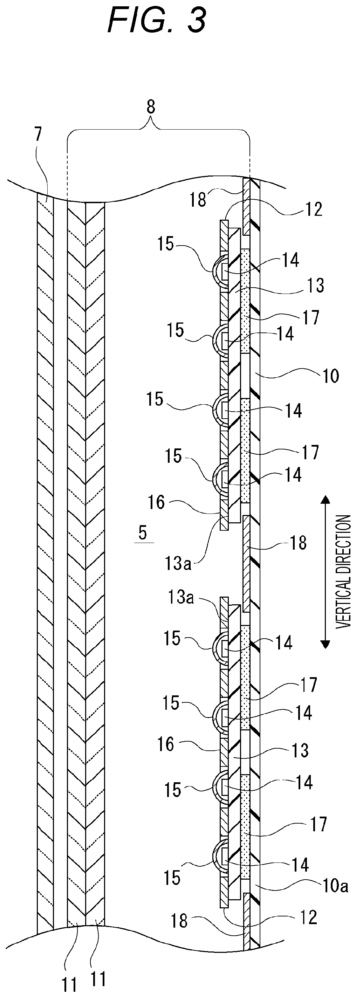

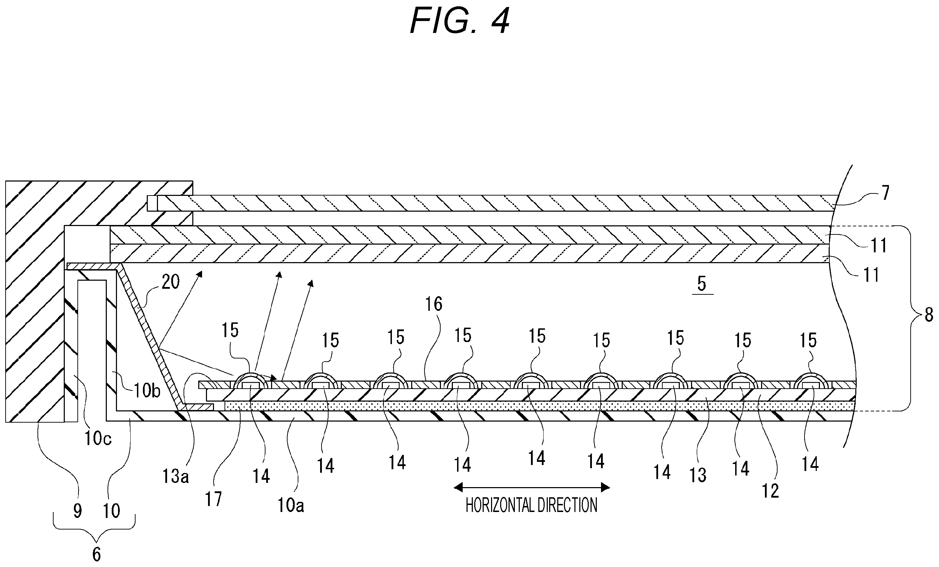

Fig. 3 is an example of a longitudinal sectional view of the display unit 2, and Fig. 4 is an example of a transverse sectional view of the display unit 2.

The backlight unit 8 includes a plurality of optical sheets 11 disposed behind the liquid crystal panel 7, and substrate units 12 disposed behind the optical sheets 11.

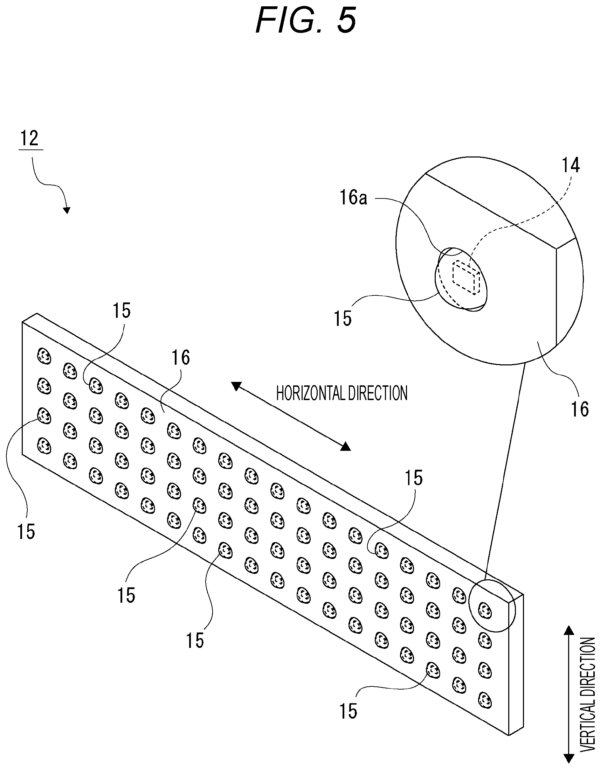

As illustrated in Fig. 5, a substrate unit 12 is formed in a flat rectangular shape whose longitudinal direction is the horizontal direction, for example.

As illustrated in Figs. 3 and 4, a substrate unit 12 includes: a light emitter substrate 13; a plurality of light emitters 14 mounted on a front surface portion 13a of the light emitter substrate 13; diffusing lenses 15 that are disposed in front of the respective light emitters 14 and diffuse light from the light emitters 14; and a first reflective sheet 16 attached from the front of the light emitter substrate 13.

The substrate unit 12 is in a state in which portions other than the portions having the light emitters 14 mounted thereon are covered with the first reflective sheet 16 when viewed from the front.

As can be seen from Figs. 3 and 4, on the substrate unit 12, four light emitters 14 are arranged in the short-side direction, and a large number of light emitters 14 are also arranged at equal intervals in the longitudinal direction.

The plurality of optical sheets 11 is formed by appropriately stacking, for example, a sheet having a function of separating light emitted from the light emitters 14 and entering the liquid crystal panel 7 into an incident light component and a polarized light component, a sheet having a function of compensating for a phase difference of light to achieve a wide viewing angle and prevent coloring, a sheet having a function of diffusing light from the light emitters 14, and the like.

As illustrated in Figs. 3 and 4, the substrate units 12 are attached to predetermined positions on the back chassis 10 by first adhesive members 17.

Second reflective sheets 18 are also attached to the back chassis 10 at gap portions between the strip-like substrate units 12 (see Figs. 3, 4, and 6).

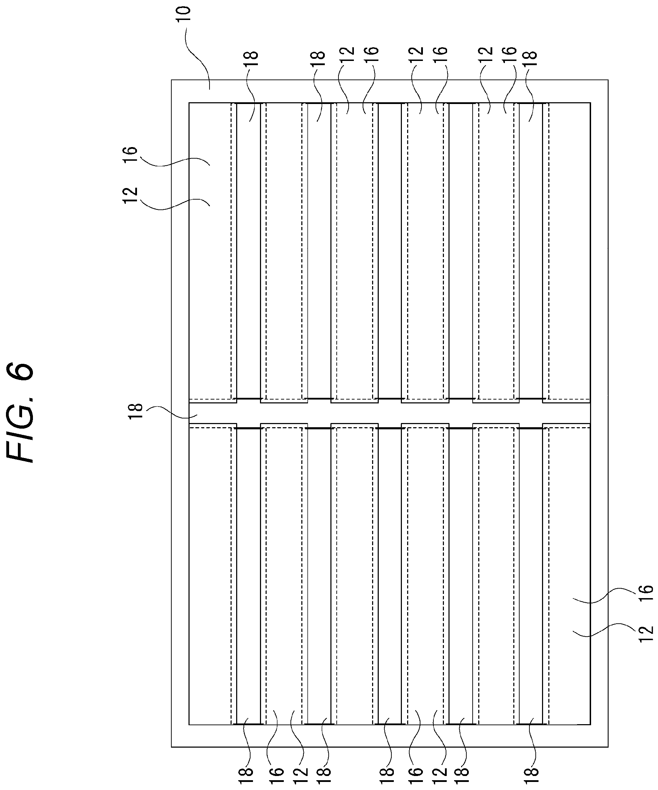

In a front view of the back chassis 10, as illustrated in Fig. 6, the first reflective sheets 16 or the second reflective sheets 18 are laid without a gap.

As illustrated in Fig. 3, the second reflective sheets 18 are disposed so that end portions of the second reflective sheets 18 and the substrate units 12 overlap each other in the front-back direction. That is, the second reflective sheets 18 and the substrate units 12 are disposed in an overlapping manner.

The thickness of the second reflective sheets 18 is designed to be smaller than the thickness of the first adhesive members 17.

With this arrangement, the substrate units 12 are maintained in an excellent attached state with respect to the back chassis 10 by the first adhesive members 17, without being hindered by the second reflective sheets 18.

Next, the configuration of each substrate unit 12 is described.

The plurality of light emitters 14 included in a substrate unit 12 is arranged at equal intervals in the vertical direction and the horizontal direction on the front surface portion 13a of the light emitter substrate 13.

The light emitters 14 are white light emitting diodes (LEDs), for example. The light emitters 14 can emit light toward the front. That is, the backlight unit 8 is of a so-called direct type.

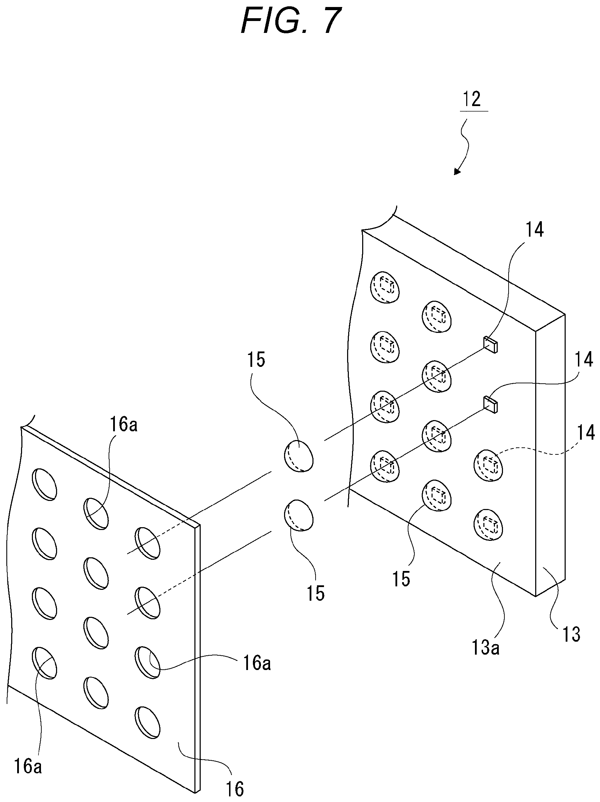

The diffusing lenses 15 disposed in front of the respective light emitters 14 are formed with silicon or the like, for example (see Fig. 7).

The first reflective sheet 16 is attached to the light emitter substrate 13 from the front.

Exposure holes 16a for exposing the light emitters 14 and the diffusing lenses 15 to the front are formed in the first reflective sheet 16.

In the light emitter substrate 13 to which the first reflective sheet 16 is attached, the light emitters 14 and the diffusing lenses 15 are exposed through the exposure holes 16a, as illustrated in Fig. 5.

With this arrangement, the front surface portion 13a of the light emitter substrate 13 is in a state of being covered with the first reflective sheet 16 over the entire surface except for the portions on which the light emitters 14 are mounted.

Note that, as illustrated in Figs. 3 and 4, the size of the first reflective sheet 16 is slightly larger than the area of the front surface portion 13a of the light emitter substrate 13.

Note that the first reflective sheet 16 may be enlarged in the horizontal direction and the vertical direction to such an extent that the side surfaces of the light emitter substrate 13 can be exactly covered.

The first reflective sheet 16 is attached to the light emitter substrate 13 from the front by second adhesive members 19.

The second adhesive members 19 are formed as an adhesive or adhesive tapes, and are applied or attached onto the first reflective sheet 16 or the light emitter substrate 13.

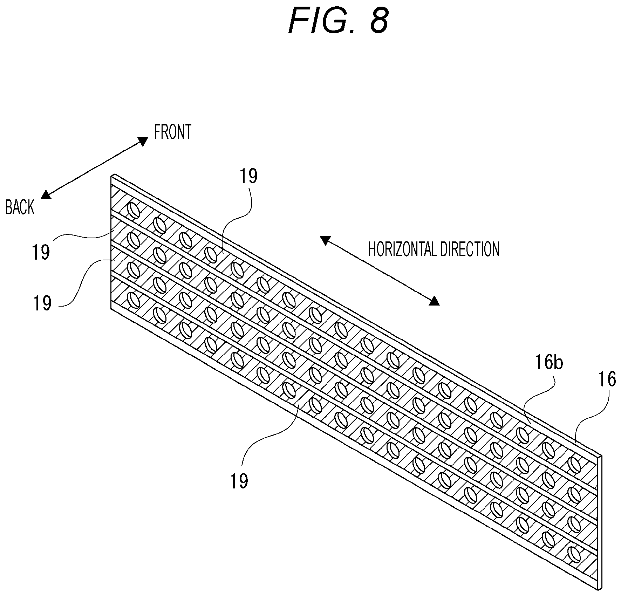

In the example illustrated in Fig. 8, on a back surface portion 16b of the first reflective sheet 16, the second adhesive members 19 are applied or attached to the respective rows of the exposure holes 16a corresponding to the respective rows of the light emitters 14 arranged in the horizontal direction.

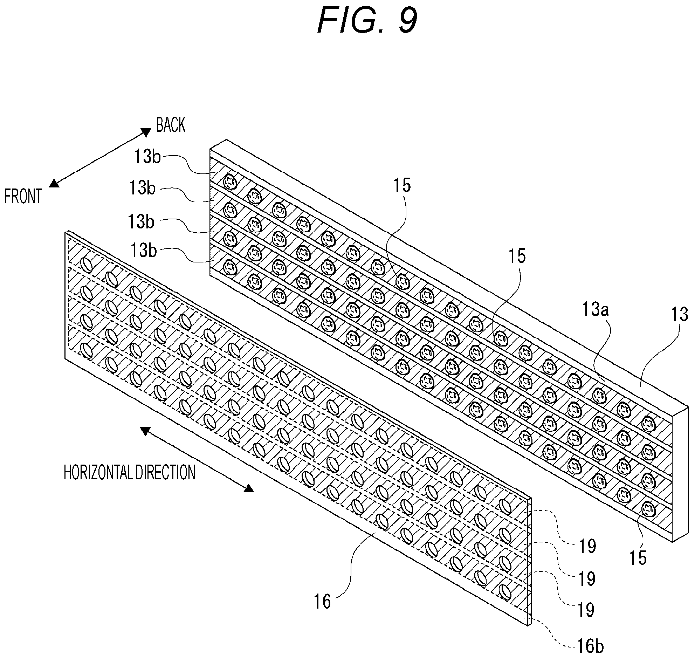

When the first reflective sheet 16 is attached to the light emitter substrate 13 in a state where the second adhesive members 19 have been applied or attached in a belt-like shape onto the back surface portion 16b of the first reflective sheet 16, belt-like regions 13b (shaded regions surrounded by solid lines in Fig. 9) for the respective rows of the light emitters 14 arranged in the horizontal direction on the light emitter substrate 13 are suitably brought into close contact with the back surface portion 16b of the first reflective sheet 16, as illustrated in Fig. 9.

That is, the first reflective sheet 16 is suitably brought into close contact with the peripheries of the portions of the front surface portion 13a of the light emitter substrate 13 on which the light emitters 14 are mounted.

This prevents detachment of the first reflective sheet 16 around the light emitters 14, and prevents light from the light emitters 14 from entering between the first reflective sheet 16 and the light emitter substrate 13.

The back chassis 10 includes: a flat surface portion 10a to which the substrate units 12 and the second reflective sheets 18 are attached; a wall portion 10b protruding toward the front from a rim portion of the flat surface portion 10a; and an attachment portion 10c that protrudes outward from a front end of the wall portion 10b, is bent backward from the middle, is engaged with the front frame 9, and thus, is attached to the front frame 9 (see Fig. 4).

A third reflective sheet 20 is attached to the wall portion 10b of the back chassis 10.

The third reflective sheet 20 is attached so as to be stretched between the front end of the wall portion 10b and end portions of the substrate units 12.

The third reflective sheet 20 is attached so as to be closer to the wall portion 10b at a position closer to the front. With this arrangement, light that has been emitted from the light emitters 14 and reached the third reflective sheet 20 is easily reflected toward the front side.

### <2. Reflectances of Reflective Sheets>

As described above, the display apparatus 1 includes the first reflective sheets 16, the second reflective sheets 18, and the third reflective sheets 20.

The first reflective sheets 16 have a shorter distance to the optical sheets 11 disposed in front thereof compared with the second reflective sheets 18, and, if the same reflective sheets are used, there is a possibility that luminance unevenness will appear.

In the display apparatus 1 according to the present technology, the first reflective sheets 16, the second reflective sheets 18, and the third reflective sheets 20 have different reflectances from one another.

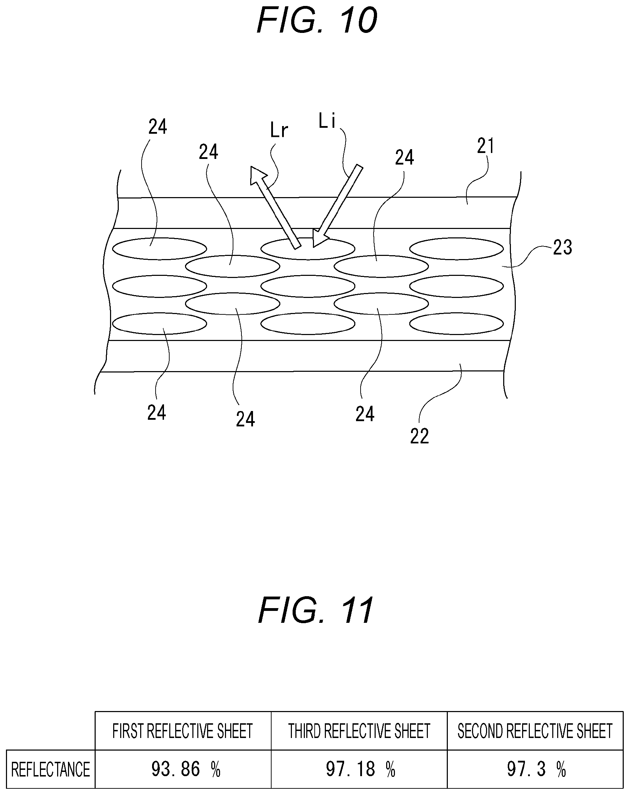

First, an example configuration of a reflective sheet is illustrated in Fig. 10.

A reflective sheet has a three-layer structure that includes two support layers 21 and 22, and a reflective layer 23 sandwiched between the support layers 21 and 22.

The support layer 21, the support layer 22, and the reflective layer 23 are formed with a resin material such as polyethylene terephthalate (PET), for example.

The reflective layer 23 includes a large number of bubbles 24.

As illustrated in Fig. 10, incident light Li that has entered through the support layer 21 is reflected (refracted) by the bubbles 24 included in the reflective layer 23, and is returned as reflected light Lr to the light incidence side.

Accordingly, a reflective sheet having a greater thickness contains a larger number of bubbles 24, and has a higher reflectance.

Also, the materials of the reflective layer 23 and the support layers 21 and 22 are varied so that the reflectances of reflective sheets can be varied.

That is, a different resin material from the resin material used for the reflective layer 23 of each first reflective sheet 16 is used for the reflective layer 23 of each second reflective sheet 18, so that the reflectance of the first reflective sheets 16 and the reflectance of the second reflective sheets 18 can be different.

As the first reflective sheets 16, the second reflective sheets 18, and the third reflective sheets 20 are made to have different reflectances, luminance unevenness can be reduced.

Fig. 11 shows an example of the reflectances of the first reflective sheets 16, the second reflective sheets 18, and the third reflective sheets 20.

The reflectance of the first reflective sheets 16 is 93.86%, the reflectance of the second reflective sheets 18 is 97.3%, and the reflectance of the third reflective sheets 20 is 97.18%.

As illustrated in Fig. 3 and others, the distance from a first reflective sheet 16 to the optical sheets 11 is shorter than the distance from any second reflective sheet 18 to the optical sheets 11.

Accordingly, the reflectance of the first reflective sheets 16 is made lower than the reflectance of the second reflective sheets 18, so that the intensity of light reaching the optical sheets 11 can be made uniform.

Furthermore, the reflectance of the third reflective sheets 20 is between the reflectance of the first reflective sheets 16 and the reflectance of the second reflective sheets 18. With this arrangement, the amount of light entering the outer peripheral portions and the central portions of the optical sheets 11 can be made uniform.

Note that the difference between the reflectance of the first reflective sheets 16 and the reflectance of the second reflective sheets 18 is about 3.44%, but this is merely an example.

For example, in a case where the thickness of the light emitter substrate 13 or the thickness of the first adhesive members 17 is increased, the difference in the distance to the optical sheets 11 becomes larger. Accordingly, the difference in reflectance is made even larger so that luminance unevenness can be reduced.

On the other hand, in a case where the thickness of the light emitter substrate 13 or the thickness of the first adhesive members 17 is reduced, the difference in the distance to the optical sheets 11 becomes smaller. Accordingly, the difference in reflectance is made smaller so that luminance unevenness can be reduced.

### <3. Conclusion>

As described above, the display apparatus 1 according to the present technology includes: the housing 6 in which the internal space 5 is formed by the front frame 9 and the back chassis 10 disposed behind the front frame 9; the liquid crystal panel 7 held by the front frame 9; the light emitter substrate 13 having a front surface (the front surface portion 13a) on which the plurality of light emitters 14 that emit light from behind the liquid crystal panel 7 is mounted; the first reflective sheets 16 attached to portions of the front surface of the light emitter substrate 13, the light emitters 14 being not mounted on the portions of the front surface of the light emitter substrate 13; and the second reflective sheets 18 attached to portions of the front surface (the front surface of the flat surface portion 10b) of the back chassis 10, the light emitter substrate 13 being not attached to the portions of the front surface of the back chassis 10.

With this configuration, it is not necessary to use a large reflective sheet that covers the entire back chassis 10.

Specifically, the first reflective sheets 16 of substantially the same size are attached to the front surface of the light emitter substrate 13, and the second reflective sheets 18 cut into strips are laid on the portions of the back chassis 10 to which the light emitter substrate 13 is not attached, so that light from the light emitters 14 can be efficiently used.

That is, by attaching reflective sheets cut into smaller portions, it is possible to improve work efficiency and productivity.

In a conventional large-sized reflective sheet formed with a single sheet, the exposure holes 16a are usually formed in conformity with the positions of the light emitters 14 so that the plurality of light emitters 14, which are often several tens to several hundreds in number, is exposed.

However, when a reflective sheet formed with a single sheet is attached, it is difficult to position the light emitters 14 to be exposed through the respective exposure holes 16a. Therefore, the work is complicated, and automation thereof is difficult.

On the other hand, in the present configuration, the first reflective sheets 16 and the second reflective sheets 18 can be attached separately. Accordingly, it is easy to perform positioning, and it is easy to automate the work.

Furthermore, in particular, the first reflective sheets 16 are attached to the back chassis 10 while being attached to the light emitter substrate 13 in the process. Accordingly, it is only required to perform the attachment work for each light emitter substrate 13, and the work is easy.

Further, as the light emitter substrate 13 is divided into a plurality of portions, the work of attaching the first reflective sheets 16 can be made even easier.

As described above with reference to Figs. 10 and 11 and others, in the display apparatus 1, the first reflective sheets 16 and the second reflective sheets 18 may have different reflectances.

As the reflectances of the first reflective sheets 16 and the second reflective sheets 18 are set so as to absorb the luminance unevenness caused by the differences in the distances between the liquid crystal panel 7 and the respective reflective sheets, the luminance unevenness can be reduced. That is, the luminance unevenness caused by steps can be reduced.

As described above with reference to Figs. 10, 11 and others, the first reflective sheets 16 in the display apparatus 1 may have a lower reflectance than that of the second reflective sheets 18.

In a case where the light emitter substrate 13 is attached to the back chassis 10, the light emitter substrate 13 usually has a shorter distance to the liquid crystal panel 7 than the back chassis 10.

Accordingly, by making the reflectance of the first reflective sheets 16 lower than that of the second reflective sheets 18, it is possible to suitably reduce luminance unevenness.

As described above with reference to Figs. 10, 11 and others, the first reflective sheets 16 in the display apparatus 1 may be formed with a material having a lower reflectance than that of the second reflective sheets 18.

This eliminates the need to take the thicknesses of the reflective sheets into consideration.

As described above with reference to Figs. 10, 11 and others, the first reflective sheets 16 in the display apparatus 1 may be formed to have a smaller thickness than that of the second reflective sheets 18.

With this arrangement, the same material can be used for the first reflective sheets 16 and the second reflective sheets 18.

Note that different materials and different thicknesses may be both adopted to make the reflectance of the first reflective sheets 16 and the reflectance of the second reflective sheets 18 differ from each other.

With this arrangement, it is possible to eliminate difficulties in selecting the materials, while preventing the thicknesses of the reflective sheets from becoming too great.

As described above with reference to Fig. 3 and others, the light emitter substrate 13 in the display apparatus 1 may be attached to the back chassis 10 via the first adhesive members 17, and the thickness of the second reflective sheets 18 may be smaller than the thickness of the first adhesive members 17.

With this arrangement, the light emitter substrate 13 can be attached to the back chassis 10, without being hindered by the thickness of the second reflective sheets 18.

Accordingly, an excellent holding state can be secured for the light emitter substrate 13, and it is possible to prevent the light emitter substrate 13 from falling off the back chassis 10.

Note that the thickness of the second reflective sheets 18 is made smaller than the thickness of the first adhesive member 17, and the thicknesses of both are made as close as possible, so that the differences in the distances between the liquid crystal panel 7 and the respective reflective sheets can be minimized.

Thus, luminance unevenness can be further reduced.

As described with reference to Fig. 3 and others, end portions of the light emitter substrate 13 in the display apparatus 1 may be positioned to overlap the second reflective sheets 18 disposed adjacent to the light emitter substrate 13.

With this arrangement, part of light that goes around to the back side of the light emitter substrate 13 through the gaps between the light emitter substrate 13 and the second reflective sheets 18 can be reflected toward the front. Thus, the efficiency of utilization of the light emitted from the light emitters 14 can be increased.

As described above with reference to Fig. 4 and others, the housing 6 of the display apparatus 1 may include the third reflective sheets 20 attached to the wall portion 10b protruding toward the front from the rim portion of the back chassis 10.

With this arrangement, light entering the liquid crystal panel 7 can be increased, and the efficiency of utilization of light emitted from the light emitters 14 can be increased.

As described above with reference to Figs. 10, 11 and others, the third reflective sheets 20 in the display apparatus 1 may be designed to have a lower reflectance than that of the second reflective sheets 18, and the first reflective sheets 16 may be designed to have a lower reflectance than that of the third reflective sheets 20.

With this arrangement, the intensity of light to be reflected by the third reflective sheets 20 can be suitably adjusted, and luminance unevenness can be reduced.

As described above with reference to Figs. 3 and 4 and others, the first reflective sheets 16 in the display apparatus 1 may be designed to be larger in size than the front surface portion 13a that is a surface of the light emitter substrate 13 and faces the front.

With this arrangement, the first reflective sheets 16 can be attached so as to wrap up to the side surfaces of the light emitter substrate 13.

Thus, the efficiency of utilization of the light emitted from the light emitters 14 can be increased.

As described above with reference to Figs. 3 and 4 and others, the first reflective sheets 16 in the display apparatus 1 may be designed to be larger in size than the front surface portion 13a by the amount equivalent to the thickness of the light emitter substrate 13.

With this arrangement, the efficiency of utilization of light emitted from the light emitters 14 can be increased, and the first reflective sheets 16 can be prevented from becoming too large. Thus, the increase in cost can be reduced.

As described above with reference to Fig. 8 and others, the first reflective sheets 16 in the display apparatus 1 may be attached to the light emitter substrate 13 by the second adhesive members 19, the regions on the light emitter substrate 13 to which the second adhesive members 19 are attached may be the plurality of belt-like regions 13b separated in the short-side direction or the longitudinal direction of the light emitter substrate 13, and the light emitters 14 may be mounted on the plurality of belt-like regions 13b on the light emitter substrate 13.

With this arrangement, the first reflective sheets 16 firmly adhere to the peripheries of light emitters 14. Accordingly, light emitted from the light emitters 14 hardly enters the back side of the first reflective sheets 16, and is easily reflected toward the front by the first reflective sheets 16.

Thus, the efficiency of utilization of the light emitted from the light emitters 14 can be increased.

Furthermore, as the second adhesive members 19 are applied or bonded to the belt-like regions 13b, instead of being applied or bonded onto the entire bonding surface, the amount of the second adhesive members 19 can be reduced, and the cost can be lowered.

A light emitting device according to the present technology includes: the housing 6 in which the internal space 5 is formed by the front frame 9 and the back chassis 10 disposed behind the front frame 9; the light emitter substrate 13 that is disposed in the internal space 5 and has a front surface on which a plurality of light emitters 14 for emitting light toward the front is mounted; the first reflective sheets 16 attached to portions of the front surface of the light emitter substrate 13 on which the light emitters 14 are not mounted; and the second reflective sheets 18 attached to portions of the front surface of the back chassis 10 to which the light emitter substrate 13 is not attached.

Such a light emitting device can be applied to various kinds of light emitting devices using reflective sheets, such as the backlight unit 8 including Mini LEDs or regular LEDs, and display apparatuses such as a liquid crystal display that adopt a direct light-source system, for example.

A light emission method according to the present technology includes: emitting light toward the front, the light including: light from the plurality of light emitters 14 mounted on the light emitter substrate 13 disposed in the internal space 5 of the housing 6 that includes the front frame 9 and the back chassis 10 disposed behind the front frame 9; light that has been emitted from the light emitters 14 and been reflected by the first reflective sheets 16 attached to the portions on which the light emitters 14 are not mounted on the front surface of the light emitter substrate 13; and light that has been emitted from the light emitters 14 and been reflected by the second reflective sheets 18 attached to the portions to which the light emitter substrate 13 is not attached on the front surface of the back chassis 10.

The various functions and effects described above can also be achieved by such a light emitting device and a light emission method.

### <4. Modification>

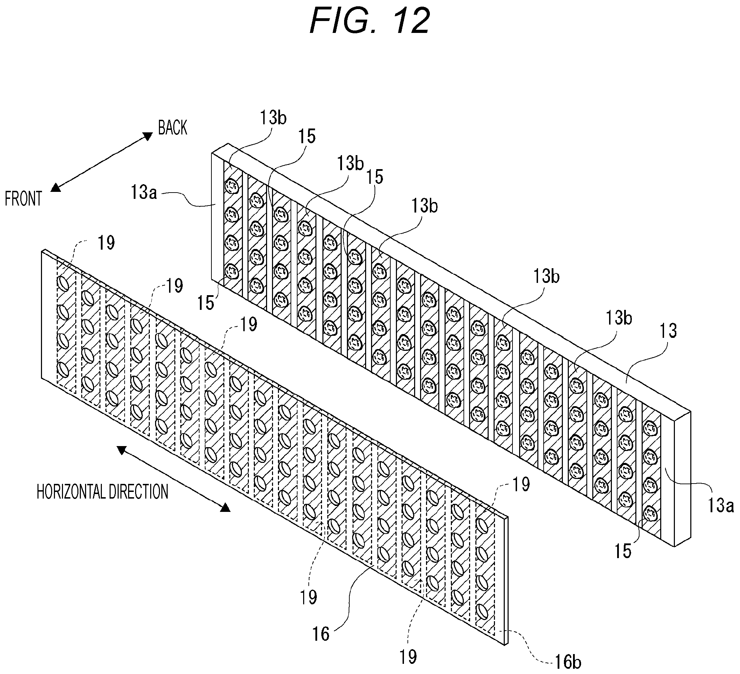

In the above-described example, the belt-like regions 13b, which are the portions of the light emitter substrate 13 bonded to the first reflective sheets 16 by the second adhesive members 19, are regions extending in the longitudinal direction of the light emitter substrate 13, but may be regions extending in the short-side direction of the light emitter substrate 13 (see Fig. 12).

Even if such belt-like regions 13b are adopted, the peripheries of the light emitters 14 are included in the belt-like regions 13b, so that the first reflective sheets 16 are suitably brought into close contact with the peripheries of the portions on which the light emitters 14 are mounted, and detachment of the first reflective sheets 16 can be prevented at the peripheries of the light emitters 14.

### <5. Present Technology>

The present technology can also adopt the configurations described below.
(1) A display apparatus including:
   a housing in which an internal space is formed by a front frame and a back chassis disposed behind the front frame;
   a liquid crystal panel held by the front frame;
   a light emitter substrate having a front surface on which a plurality of light emitters that emit light from behind the liquid crystal panel is mounted;
   a first reflective sheet attached to a portion of the front surface of the light emitter substrate, the light emitters being not mounted on the portion of the front surface of the light emitter substrate; and
   a second reflective sheet attached to a portion of a front surface of the back chassis, the light emitter substrate being not attached to the portion of the front surface of the back chassis.
(2) The display apparatus according to (1), in which
   the first reflective sheet and the second reflective sheet are different in reflectance.
(3) The display apparatus according to (2), in which
   the first reflective sheet has a lower reflectance than a reflectance of the second reflective sheet.
(4) The display apparatus according to (3), in which
   the first reflective sheet is formed with a material that has a lower reflectance than a reflectance of the second reflective sheet.
(5) The display apparatus according to (3) or (4), in which
   the first reflective sheet has a smaller thickness than a thickness of the second reflective sheet.
(6) The display apparatus according to any one of (1) to (5), in which
   the light emitter substrate is attached to the back chassis via a first adhesive member, and
   a thickness of the second reflective sheet is smaller than a thickness of the first adhesive member.
(7) The display apparatus according to any one of (1) to (6), in which
   an end portion of the light emitter substrate is positioned to overlap the second reflective sheet disposed adjacent to the light emitter substrate.
(8) The display apparatus according to any one of (1) to (7), further including
   a third reflective sheet attached to a wall portion of the housing, the wall portion protruding frontward from a rim portion of the back chassis.
(9) The display apparatus according to (8), in which
   the third reflective sheet has a lower reflectance than a reflectance of the second reflective sheet, and
   the first reflective sheet has a lower reflectance than the reflectance of the third reflective sheet.
(10) The display apparatus according to any one of (1) to (9), in which
   the first reflective sheet is larger in size than a front surface portion of the light emitter substrate, the front surface portion being a surface facing frontward.
(11) The display apparatus according to (10), in which
   the first reflective sheet is larger in size than the front surface portion by an amount equivalent to a thickness of the light emitter substrate.
(12) The display apparatus according to any one of (1) to (11), in which
   the first reflective sheet is attached to the light emitter substrate by a second adhesive member,
   a region to which the second adhesive member is attached on the light emitter substrate is a plurality of belt-like regions separated in a short-side direction or a longitudinal direction of the light emitter substrate, and
   the light emitters are mounted on the plurality of belt-like regions on the light emitter substrate.
(13) A light emitting device including:
   a housing in which an internal space is formed by a front frame and a back chassis disposed behind the front frame;
   a light emitter substrate that is disposed in the internal space and has a front surface on which a plurality of light emitters that emit light frontward is mounted;
   a first reflective sheet attached to a portion of the front surface of the light emitter substrate, the light emitters being not mounted on the portion of the front surface of the light emitter substrate; and
   a second reflective sheet attached to a portion of a front surface of the back chassis, the light emitter substrate being not attached to the portion of the front surface of the back chassis.
(14) A light emission method including
   emitting light frontward, the light including: light from a plurality of light emitters mounted on a light emitter substrate disposed in an internal space of a housing that includes a front frame and a back chassis disposed behind the front frame; light that has been emitted from the light emitters and been reflected by a first reflective sheet attached to a portion on which light emitters are not mounted on a front surface of the light emitter substrate; and light that has been emitted from the light emitters and been reflected by a second reflective sheet attached to a portion to which the light emitter substrate is not attached on a front surface of the back chassis.

### REFERENCE SIGNS LIST

- 1: Display apparatus
- 5: Internal space
- 6: Housing
- 7: Liquid crystal panel
- 9: Front frame
- 10: Back chassis
- 10b: Wall portion
- 13: Light emitter substrate
- 13a: Front surface portion
- 13b: Belt-like region
- 14: Light emitter
- 16: First reflective sheet
- 17: First adhesive member
- 18: Second reflective sheet
- 19: Second adhesive member
- 20: Third reflective sheet

## Claims

1. A display apparatus comprising:
a housing in which an internal space is formed by a front frame and a back chassis disposed behind the front frame;
a liquid crystal panel held by the front frame;
a light emitter substrate having a front surface on which a plurality of light emitters that emit light from behind the liquid crystal panel is mounted;
a first reflective sheet attached to a portion of the front surface of the light emitter substrate, the light emitters being not mounted on the portion of the front surface of the light emitter substrate; and
a second reflective sheet attached to a portion of a front surface of the back chassis, the light emitter substrate being not attached to the portion of the front surface of the back chassis.

2. The display apparatus according to claim 1, wherein
the first reflective sheet and the second reflective sheet are different in reflectance.

3. The display apparatus according to claim 2, wherein
the first reflective sheet has a lower reflectance than a reflectance of the second reflective sheet.

4. The display apparatus according to claim 3, wherein
the first reflective sheet is formed with a material that has a lower reflectance than a reflectance of the second reflective sheet.

5. The display apparatus according to claim 3, wherein
the first reflective sheet is formed to have a smaller thickness than a thickness of the second reflective sheet.

6. The display apparatus according to claim 1, wherein
the light emitter substrate is attached to the back chassis via a first adhesive member, and
a thickness of the second reflective sheet is smaller than a thickness of the first adhesive member.

7. The display apparatus according to claim 1, wherein
an end portion of the light emitter substrate is positioned to overlap the second reflective sheet disposed adjacent to the light emitter substrate.

8. The display apparatus according to claim 1, further comprising
a third reflective sheet attached to a wall portion of the housing, the wall portion protruding frontward from a rim portion of the back chassis.

9. The display apparatus according to claim 8, wherein
the third reflective sheet has a lower reflectance than a reflectance of the second reflective sheet, and
the first reflective sheet has a lower reflectance than the reflectance of the third reflective sheet.

10. The display apparatus according to claim 1, wherein
the first reflective sheet is larger in size than a front surface portion of the light emitter substrate, the front surface portion being a surface facing frontward.

11. The display apparatus according to claim 10, wherein
the first reflective sheet is larger in size than the front surface portion by an amount equivalent to a thickness of the light emitter substrate.

12. The display apparatus according to claim 1, wherein
the first reflective sheet is attached to the light emitter substrate by a second adhesive member,
a region to which the second adhesive member is attached on the light emitter substrate is a plurality of belt-like regions separated in a short-side direction or a longitudinal direction of the light emitter substrate, and
the light emitters are mounted on the plurality of belt-like regions on the light emitter substrate.

13. A light emitting device comprising:
a housing in which an internal space is formed by a front frame and a back chassis disposed behind the front frame;
a light emitter substrate that is disposed in the internal space and has a front surface on which a plurality of light emitters that emit light frontward is mounted;
a first reflective sheet attached to a portion of the front surface of the light emitter substrate, the light emitters being not mounted on the portion of the front surface of the light emitter substrate; and
a second reflective sheet attached to a portion of a front surface of the back chassis, the light emitter substrate being not attached to the portion of the front surface of the back chassis.

14. A light emission method comprising
emitting light frontward, the light including: light from a plurality of light emitters mounted on a light emitter substrate disposed in an internal space of a housing that includes a front frame and a back chassis disposed behind the front frame; light that has been emitted from the light emitters and been reflected by a first reflective sheet attached to a portion on which light emitters are not mounted on a front surface of the light emitter substrate; and light that has been emitted from the light emitters and been reflected by a second reflective sheet attached to a portion to which the light emitter substrate is not attached on a front surface of the back chassis.

## Amended claims

### Amended claims under Art. 19.1 PCT

1. (Amended) A display apparatus comprising:
a housing in which an internal space is formed by a front frame and a back chassis disposed behind the front frame;
a liquid crystal panel;
a light emitter substrate having a front surface on which a plurality of light emitters that emit light from behind the liquid crystal panel is mounted;
a first reflective sheet attached to a portion of the front surface of the light emitter substrate, the light emitters being not mounted on the portion of the front surface of the light emitter substrate; and
a second reflective sheet attached to a portion of a front surface of the back chassis, the light emitter substrate being not attached to the portion of the front surface of the back chassis.

2. The display apparatus according to claim 1, wherein
the first reflective sheet and the second reflective sheet are different in reflectance.

3. The display apparatus according to claim 2, wherein
the first reflective sheet has a lower reflectance than a reflectance of the second reflective sheet.

4. The display apparatus according to claim 3, wherein
the first reflective sheet is formed with a material that has a lower reflectance than a reflectance of the second reflective sheet.

5. The display apparatus according to claim 3, wherein
the first reflective sheet is formed to have a smaller thickness than a thickness of the second reflective sheet.

6. The display apparatus according to claim 1, wherein
the light emitter substrate is attached to the back chassis via a first adhesive member, and
a thickness of the second reflective sheet is smaller than a thickness of the first adhesive member.

7. The display apparatus according to claim 1, wherein
an end portion of the light emitter substrate is positioned to overlap the second reflective sheet disposed adjacent to the light emitter substrate.

8. The display apparatus according to claim 1, further comprising
a third reflective sheet attached to a wall portion of the housing, the wall portion protruding frontward from a rim portion of the back chassis.

9. The display apparatus according to claim 8, wherein
the third reflective sheet has a lower reflectance than a reflectance of the second reflective sheet, and
the first reflective sheet has a lower reflectance than the reflectance of the third reflective sheet.

10. The display apparatus according to claim 1, wherein
the first reflective sheet is larger in size than a front surface portion of the light emitter substrate, the front surface portion being a surface facing frontward.

11. The display apparatus according to claim 10, wherein
the first reflective sheet is larger in size than the front surface portion by an amount equivalent to a thickness of the light emitter substrate.

12. The display apparatus according to claim 1, wherein
the first reflective sheet is attached to the light emitter substrate by a second adhesive member,
a region to which the second adhesive member is attached on the light emitter substrate is a plurality of belt-like regions separated in a short-side direction or a longitudinal direction of the light emitter substrate, and
the light emitters are mounted on the plurality of belt-like regions on the light emitter substrate.

13. A light emitting device comprising:
a housing in which an internal space is formed by a front frame and a back chassis disposed behind the front frame;
a light emitter substrate that is disposed in the internal space and has a front surface on which a plurality of light emitters that emit light frontward is mounted;
a first reflective sheet attached to a portion of the front surface of the light emitter substrate, the light emitters being not mounted on the portion of the front surface of the light emitter substrate; and
a second reflective sheet attached to a portion of a front surface of the back chassis, the light emitter substrate being not attached to the portion of the front surface of the back chassis.

14. A light emission method comprising
emitting light frontward, the light including: light from a plurality of light emitters mounted on a light emitter substrate disposed in an internal space of a housing that includes a front frame and a back chassis disposed behind the front frame; light that has been emitted from the light emitters and been reflected by a first reflective sheet attached to a portion on which light emitters are not mounted on a front surface of the light emitter substrate; and light that has been emitted from the light emitters and been reflected by a second reflective sheet attached to a portion to which the light emitter substrate is not attached on a front surface of the back chassis.
